# EUROPEAN PATENT APPLICATION

(11) **EP 1 111 004 A1**
(43) Date of publication of application: **27.06.2001**
(21) Application number: 00126554.5
(22) Date of filing: 12.12.2000
(51) Int. Cl.: C08K 13/02, C08L 23/28

(54) **Elastomeric butyl compounds with improved chemical bonding between the butyl elastomer and the filler**

(30) Priority: 24.12.1999 CA 2293149
(71) Applicant: Bayer Inc., Sarnia, ON N7T 7M2 (CA)
(72) Inventor: Hopkins, William, Sarnia, Ontario N7S 6G2 (CA); Von Hellens, Carl Walter, Bright's Grove, Ontario N0N 1C0 (CA); Koski, Ahti, Wilkesport, Ontario N0P 2R0 (CA); Rausa, John, Corunna, Ontario N0N 1G0 (CA)
(74) Representative: Feldhues, Michael L.F., Dr.

(57) **Abstract**

The invention provides a process for preparing a filled halobutyl elastomer which comprises admixing a halobutyl elastomer, particles of filler and a silane that has at least one hydroxyl group or hydrolysable group attached to a silicon atom of the silane, and curing the filled halobutyl elastomer with sulphur. The invention also provides a filled composition that has improved properties when compared with known carbon black filled elastomeric compositions.

## Description

The present invention relates to halogenated butyl elastomers.

### Background of the Invention

It is known that reinforcing fillers such as carbon black and silica greatly improve the strength and fatigue properties of elastomeric compounds. It is also known that chemical interaction occurs between the elastomer and the filler. For example, good interaction between carbon black and highly unsaturated elastomers such as polybutadiene (BR) and styrene butadiene copolymers (SBR) occurs because of the large number of carbon-carbon double bonds present in these copolymers. Butyl elastomers may have only one tenth or fewer of the number of carbon-carbon double bonds found in BR or SBR, and compounds made from butyl elastomers are known to interact poorly with carbon black. For example, a compound prepared by mixing carbon black with a combination of BR and butyl elastomers results in domains of BR, which contain most of the carbon black, and butyl domains which contain very little carbon black. It is also known that butyl compounds have poor abrasion resistance. It has been postulated that this poor abrasion resistance is due to one or both of the following causes: (i) poor interaction between the butyl elastomer and filler, and (ii) low level of crosslinking compared to BR or SBR.

### Summary of the Invention

The present invention provides a process for preparing butyl elastomers having enhanced interaction with a filler, especially a mineral filler, and also provides filled butyl elastomer compositions that have improved properties when compared with known carbon black filled butyl elastomeric compositions.

Accordingly, in one aspect the present invention provides a process which comprises mixing a halogenated butyl elastomer with a filler, especially a mineral filler, in the presence of a silane that has at least one hydroxyl group or hydrolysable group attached to a silicon atom of the silane, and curing the filled halobutyl elastomer with sulphur.

The halobutyl elastomer that is admixed with the filler and the silane may be a mixture with another elastomer or elastomeric compound. The halobutyl elastomer should constitute more than 20% of any such mixture. Preferably the halobutyl elastomer should constitute at least 40%, more preferably at least 60% of any such mixture. In some cases it is preferred not to use mixtures but to use the halobutyl elastomer as the sole elastomer. If mixtures are to be used, however, then the other elastomer may be, for example, natural rubber, polybutadiene, styrene-butadiene or poly-chloroprene or an elastomer compound containing one or more of these elastomers.

The filled halogenated butyl elastomer can be cured to obtain a cured product that displays improved properties, for instance in abrasion resistance, rolling resistance and traction. Curing is effected with sulfur, often accompanied by a basic material, for example magnesium oxide. The preferred amount of sulfur is 0.3 to 2.0 parts by weight per hundred parts of rubber, and the preferred amount of magnesium oxide is 0.5 to 2 parts by weight, more preferably 1 to 2 parts by weight. There may also be used an activator, for example zinc oxide. If zinc oxide is present it may be present in an amount up to 5 parts, preferably up to 2 parts, by weight. Other ingredients, for instance stearic acid, or antioxidants, or accelerators may also be added to the elastomer prior to curing. Sulphur curing is then effected in known manner. See, for instance, chapter 2, "The Compounding and Vulcanization of Rubber", of "Rubber Technology", 3^{rd} edition, published by Chapman & Hall, 1995.

The mineral-filled halobutyl elastomer of the invention can be admixed with other elastomers or elastomeric compounds before it is subjected to the curing with sulphur. This is discussed further below.

In yet another aspect, the invention provides a sulphur-cured, filled halogenated elastomer, optionally also containing other elastomers or elastomeric compounds prepared by the processes described above.

### Detailed Description of the Preferred Embodiments

By the expression "halogenated butyl elastomer" is meant a chlorinated or brominated butyl elastomer. Brominated elastomers are preferred and the invention is further described, by way of example, with reference to brominated elastomers. It should be understood, however, that the invention extends to use of a chlorinated butyl elastomer, and references to brominated butyl elastomer should be construed as extending also to chlorinated butyl elastomer unless the context clearly requires otherwise.

Brominated butyl elastomers suitable for use in this invention can be obtained by bromination of butyl rubber which is a copolymer of isobutylene and a comonomer that is usually a C₄ to C₆ conjugated diolefin, preferably isoprene. Comonomers other than conjugated diolefins can be used, however, and mention is made of alkylsubstituted vinyl aromatic comonomers such as C₁-C₄-alkyl substituted styrene. One example that is commercially available is brominated isobutylene methylstyrene copolymer (BIMS) in which the comonomer is p-methylstyrene.

Brominated butyl elastomer typically contains from about 1 to about 3 weight percent of isoprene and from about 97 to about 99 weight percent of isobutylene based on the hydrocarbon content of the polymer, and from about 1 to about 4 weight percent bromine based on the bromobutyl polymer. A typical bromobutyl polymer has a molecular weight, expressed as the Mooney viscosity (ML 1 + 8 at 125°C), of from about 28 to about 55.

For use in the present invention the brominated butyl elastomer preferably contains from about 1 to about 2 weight percent of isoprene and from about 98 to 99 weight percent of isobutylene based on the hydrocarbon content of the polymer and from about 0.5 to about 2.5 weight percent, preferably from about 0.75 to about 2.3 weight percent, of bromine based on the brominated butyl polymer.

A stabilizer may be added to the brominated butyl elastomer. Suitable stabilizers include calcium stearate and epoxidized soyabean oil, preferably used in an amount of from about 0.5 to about 5 parts by weight per 100 parts by weight of the brominated butyl rubber.

Examples of suitable brominated butyl elastomers include Polysar BB2040, commercially available from Bayer. Polysar BB2040 has a Mooney viscosity (RPML 1+8 @ 125°C) of 39 ± 4, a bromine content of 2.0 ± 0.3 wt% and an approximate molecular weight of 500,000 grams per mole. Examples of suitable chlorinated butyl elastomers include Polysar CB1240, also commercially available from Bayer. Polysar CB1240 has a Mooney viscosity (RPML 1+8 @ 125°C) of 38 ± 4 and a chlorine content of 1.25 ± 0.1 wt%.

The brominated butyl elastomer used in the process of this invention can be a graft copolymer of a brominated butyl rubber and a polymer based on a conjugated diolefin monomer. Our copending Canadian patent application serial no. 2,279,085 is directed to a process for preparing such graft copolymers by mixing solid brominated butyl rubber with a solid polymer based on a conjugated diolefin monomer and which also includes some C-S-(S)ₙ-C bonds, where n is an integer from 1 to 7, the mixing being carried out at a temperature greater than about 50°C and for a time sufficient to cause grafting. The bromobutyl elastomer of the graft copolymer can be any of those described above. The conjugated diolefins that can be incorporated in the graft copolymer generally have the structural formula: 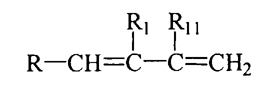 wherein
- R: is a hydrogen atom or an alkyl group containing from 1 to 8 carbon atoms and
wherein
- R₁ and R₁₁: can be the same or different and are selected from the group consisting of hydrogen atoms and alkyl groups containing from 1 to 4 carbon atoms.

Some representative nonlimiting examples of suitable conjugated diolefins include 1,3-butadiene, isoprene, 2-methyl-1,3-pentadiene, 4-butyl-1,3-pentadicne, 2,3-dimethyl-1,3-pentadiene 1,3-hexadiene, 1,3-octadiene, 2,3-dibutyl-1,3-pentadiene, 2-ethyl-1,3-pentadiene, 2-ethyl-1,3-butadiene and the like. Conjugated diolefin monomers containing from 4 to 8 carbon atoms are preferred, 1,3-butadiene and isoprene being especially preferred.

The polymer based on a conjugated diene monomer can be a homopolymer, or a copolymer of two or more conjugated diene monomers, or a copolymer with a vinyl aromatic monomer.

The vinyl aromatic monomers which can optionally be used are selected so as to be copolymerizable with the conjugated diolefin monomers being employed. Generally, any vinyl aromatic monomer which is known to polymerize with organo alkali metal initiators can be used. Such vinyl aromatic monomers usually contain from 8 to 20 carbon atoms, preferably from 8 to 14 carbon atoms. Some examples of vinyl aromatic monomers that can be copolymerized include styrene, alpha-methyl styrene, various alkyl styrenes including p-methylstyrene, p-methoxy styrene, 1-vinylnaphthalene, 2-vinyl naphthalene, 4-vinyl toluene and the like. Styrene is preferred for copolymerization with 1,3-butadiene alone or for terpolymerization with both 1,3-butadiene and isoprene.

The filler is composed of particles of a mineral, and examples include silica, silicates, clay such as bentonite, gypsum, alumina, titanium dioxide, talc, mixtures of these, and the like. These mineral particles have hydroxyl groups on their surface, rendering them hydrophilic and oleophobic. This exacerbates the difficulty of achieving good interaction between the filler particles and the butyl elastomer. For many purposes, the preferred mineral is silica, especially silica made by carbon dioxide precipitation of sodium silicate.

Dried amorphous silica particles suitable for use in accordance with the invention may have a mean agglomerate particle size between 1 and 100 microns, preferably between 10 and 50 microns and most preferably between 10 and 25 microns. It is preferred that less than 10 percent by volume of the agglomerate particles are below 5 microns or over 50 microns in size. A suitable amorphous dried silica moreover has a BET surface area, measured in accordance with DIN (Deutsche Industrie Norm) 66131, of between 50 and 450 square meters per gram and a DBP absorption, as measured in accordance with DIN 53601, of between 150 and 400 grams per 100 grams of silica, and a drying loss, as measured according to DIN ISO 787/11, of from 0 to 10 percent by weight. Suitable silica fillers are available under the trademarks HiSil 210, HiSil 233 and HiSil 243 from PPG Industries Inc. Also suitable are Vulkasil S and Vulkasil N, from Bayer AG.

The silane has a hydroxyl group or a hydrolysable group that is attached to the silicon atom of the silane. The hydrolysable group can be regarded as a hydroxyl group that is produced in situ from a silane that has a silicon atom that bears a group that will undergo hydrolysis to yield a hydroxyl group on the silicon atom. As examples of such hydrolysable groups there are mentioned particularly alkoxy groups having up to six carbon atoms, especially ethoxy and methoxy groups. These and other hydrolysable groups are discussed further below.

The silane is preferably an aminosilane or a sulfur-containing silane. As aminosilanes there are mentioned especially aminosilanes of formula I defined in our PCT international application PCT/CA98/00499, published on 26 November 1998 as WO 98/53004, and acid addition salts and quaternary ammonium salts of such aminosilanes.

Formula I of PCT/CA98/00499 is as follows: 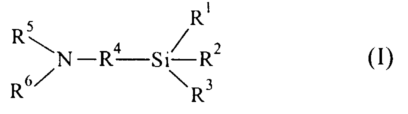 in which at least one of
- R¹, R² and R³,: preferably two of R¹, R² and R³ and most preferably three of R¹, R² and R³ are hydroxyl or hydrolysable groups;
- R⁴: is a divalent group that is resistant to hydrolysis at the Si-R⁴ bond;
- R⁵: is selected from the group consisting of hydrogen; a C₁₋₄₀ alkyl group; a C₂₋₄₀ mono-, di- or tri-unsaturated alkenyl group; a C₆-C₄₀ aryl group; a group of the formula: 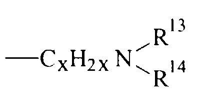 in which
x is an integer from 2 to 10, R¹³ and R¹⁴, which may be the same or different, are each hydrogen; C₁₋₁₈ alkyl; C₂₋₁₈ mono-, di- or tri-unsaturated alkenyl; phenyl; a group of the formula: 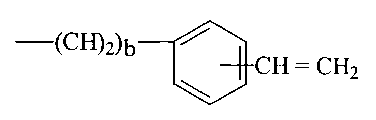 wherein
b is an integer from 1 to 10; a group of formula: 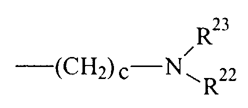 wherein
c is an integer from 1 to 10 and R²² and R²³ which may be the same or different, are each hydrogen, a C₁₋₁₀ alkyl group or C₂₋₁₀ alkenyl group, provided that there is no double bond in the position alpha to the nitrogen atom; a group of the formula:

-[(CH₂)ᵣ NH]_{d}-H

wherein
r is an integer from 1 to 6 and d is an integer from 1 to 4;
- R⁶: may be any of the groups defined for R⁵, or R⁵ and R⁶ may together form a divalent group of formula: 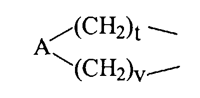 in which
A is selected from the group consisting of an oxygen atom and a sulfur atom, -CHR groups and or -NR groups in which R is hydrogen or a C₁₋₄₀ alkyl or
C₂₋₄₀ alkenyl group, a C₆-C₄₀ aryl group, and t and v are each independently 1, 2, 3 or 4; provided that the sum of t and v does not exceed 6, and is preferably 4.

In the aminosilane of formula I, it is preferred that all three of the groups R¹, R² and R³ are readily hydrolysable. Suitable groups R¹ include hydroxyl groups and hydrolysable groups of formula OCₚH₂ₚ+1, where p has a value from 1 to 10. The alkyl chain can be interrupted by oxygen atoms, to give groups, for example, of formula CH₃OCH₂O-, CH₃OCH₂OCH₂O-, CH₃(OCH₂)₄O-, CH₃OCH₂CH₂O-, C₂H₅OCH₂O-, C₂H₅OCH₂OCH₂O-, or C₂H₅OCH₂CH₂O-. Other suitable hydrolysable groups include phenoxy, acetoxy, chloro, bromo, iodo, ONa, OLi, OK or amino or mono- or dialkylamino, wherein the alkyl group(s) have 1 to 30 carbon atoms.

R² and R³ can take the same values as R¹, provided that only one of R¹, R² and R³ is chloro, bromo or iodo. Preferably, only one or two of R¹, R² and R³ is hydroxyl or ONa, OLi or OK.

Non-limiting examples of groups R² and R³ that are not hydrolysable include C₁₋₁₀ alkyl, C₂₋₁₀ mono- or diunsaturated alkenyl, and phenyl. R² and R³ can also be a group -R⁴NR⁵R⁶, discussed further below. It is preferred that R¹, R² and R³ are all the same and are CH₃O-, C₂H₅O- or C₃H₈O-. Most preferably they are all CH₃O-or C₂H₅O-.

The divalent group R⁴ is preferably such that N-R⁴-Si is one of the formula:

N-(CH₂)ₚ(O)ₒ(C₆H₄)ₙ(CH₂)ₘ(CH=CH)ₖ-Si

in which
k, m, n, o and p are all whole numbers.

The order of the moieties between N and Si is not particularly restricted, other than that neither N or O should be directly bound to Si. The value of k is 0 or 1, the value of m is from 0 to 20 inclusive, the value of n is 0, 1 or 2, the value of o is 0 or 1 and the value of p is from 0 to 20 inclusive, with the provisos that the sum of the values of k, m, n, o and p is at least 1 and not more than 20 and that if o is 1, p is 1 or greater and the sum of k, m and n is 1 or greater, i.e. that the Si atom is linked directly to a carbon atom. There should be no hydrolysable bond between the silicon and nitrogen atoms. Preferably, m is 3 and 1, n, o and p are all 0, i.e., R⁴ is -CH₂CH₂CH₂-.

The group R⁵ is preferably a C₈₋₂₀ mono-unsaturated alkenyl group, most preferably a C₁₆₋₁₈ monounsaturated alkenyl group. R⁶ is preferably hydrogen.

Suitable aminosilanes of Formula I include, but are not limited to:
3-aminopropylmethyldiethoxysilane,
N-2-(vinylbenzylamino)-ethyl-3-aminopropyl-trimethoxysilane,
N-(2-aminoethyl)-3-aminopropyltrimethoxysilane,
trimethoxysilylpropyldiethylenetriamine,
N-2-(aminoethyl)-3 aminopropyltris(2-ethylhexoxy)-silane,
3-aminopropyldiisopropylethoxysilane,
N-(6-aminohexy)aminopropyltrimethoxysi lane,
4-aminobutyltriethoxysilane,
4-aminobutyldimethylmethoxysilane,
triethoxysilylpropyl-diethylenetriamine,
3-aminopropyltris(methoxyethoxyethoxy)silane,
N-(2-aminoethyl)-3-aminopropyltrimethoxysilane,
N-2-(aminoethyl)-3-aminopropyltris(2-ethylhexoxy)-silane,
3-aminopropyldiisopropylethoxysilane,
N-(6-aminohexyl)aminopropyltrimethoxysilane,
4-aminobutyltriethoxysilane, and
(cyclohexylaminomethyl)-methyldiethoxysilane.

Preferred compounds of formula I include those in which R⁵ is hydrogen and R⁶ is the alkenyl group from the following: soya alkyl, tall oil alkyl, stearyl, tallow alkyl, dihydrogenated tallow alkyl, cocoalkyl, rosin alkyl, and palmityl, it being understood that in this case the alkyl may include unsaturation.

It is preferred that at least one of R⁴, R¹³ and R¹⁴ has a chain of at least 8 carbon atoms, more preferably at least 10 carbon atoms, uninterrupted by any heteroatom.

The aminosilane of formula I can be used as the free base, or in the form of its acid addition or quaternary ammonium salt, i.e. 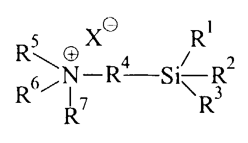 wherein
R¹, R², R³, R⁴, R⁵ and R⁶ are as defined above; R⁷ is selected from the group consisting of hydrogen,
C₁₋₄₀ alkyl groups and C₂₋₄₀ mono-, di- or tri-unsaturated alkenyl groups, and X is an anion. X is suitably chlorine, bromine, or sulphate, of which chlorine and bromine are preferred, and R⁷ is preferably hydrogen.

Non-limiting examples of suitable salts of aminosilanes of formula I include
N-oleyl-N-[(3-triethoxysilyl)propyl]ammonium chloride,
N-3-aminopropylmethyldiethoxy-silane hydrobromide,
(aminoethylaminomethyl)phenyltrimethoxysilane hydrochloride,
N-[(3-trimethoxysilyl)propyl]-N-methyl,
N-N-diallylammonium chloride,
N-tetradecyl-N,N-dimethyl-N-((3-trimethoxysilyl) propyl]ammonium bromide
3 [2-N-benzylaminoethyl-aminopropyl]trimethoxysilane hydrochloride,
N-octadecyl-N,N-dimethyl-N-[(3-tri-methoxysilyl) propyl]ammonium bromide,
N-[(trimethoxysilyl)propyl]-N-tri(n-butyl)ammonium chloride,
N-octadecyl-N-[3-triethoxysilyl)propyl]ammonium chloride,
N-2-(vinylbenzylamino)ethyl-3-aminopropyl-trimethoxysilane hydrochloride,
N-2-(vinylbenzylamino)ethyl-3-aminopropyl-trimethoxysilane hydrochloride and
N-oleyl-N-[(3-trimethoxysilyl)propyl]ammonium chloride.

The silane compound may be a sulfur-containing silane compound. Suitable sulfur-containing silanes include those described in United States patent 4,704,414, in published European patent application 0,670,347 A1 and in published German patent application 4435311 A1. One suitable compound is a mixture of bis[3-(triethoxysilyl)propyl]-monosulfane, bis[3-(triethoxysilyl)propyl] disulfane, bis[3-(triethoxysilyl)propyl]trisulfane and bis[3-(triethoxysilyl)propyl]tetrasulfane and higher sulfane homologues available under the trademarks Si-69 (average sulfane 3.5), Silquest™ A-1589 (from CK Witco)or Si-75 (from Degussa) (average sulfane 2.0). Another example is bis[2-(triethoxysilyl)ethyl]-tetrasulfane, available under the trade-mark Silquest RC-2.

Examples of suitable sulfur-containing silanes include compounds of formula

R⁸R⁹R¹⁰SiR¹¹

in which at least one of
R⁸, R⁹ and R¹⁰, preferably two of R⁸, R⁹ and R¹⁰ and most preferably three of R⁸, R⁹ and R¹⁰, are hydroxyl or hydrolysable groups. The groups R⁸, R⁹ and R¹⁰ are bound to the silicon atom. The group R⁸ may be hydroxyl or OCₚH₂ₚ+1 where p is from 1 to 10 and the carbon chain may be interrupted by oxygen atoms, to give groups, for example of formula CH₃OCH₂O-, CH₃OCH₂OCH₂O-, CH₃(OCH₂)₄O-, CH₃OCH₂CH₂O-, C₂H₅OCH₂O-, C₂H₅OCH₂OCH₂O-, or C₂H₅OCH₂CH₂O-. Alternatively, R⁸ may be phenoxy. The group R⁹ may be the same as R⁸. R⁹ may also be a C₁₋₁₀ alkyl group, or a C₂₋₁₀ mono- or diunsaturated alkenyl group. Further, R⁹ may be the same as the group R¹¹ described below.

R¹⁰ may be the same as R⁸, but it is preferred that R⁸, R⁹ and R¹⁰ are not all hydroxyl. R¹⁰ may also be C₁₋₁₀ alkyl, phenyl, C₂₋₁₀ mono- or diunsaturated alkenyl. Further, R¹⁰ may be the same as the group R¹¹ described below.

The group R¹¹ attached to the silicon atom is such that it may participate in a crosslinking reaction with unsaturated polymers by contributing to the formation of crosslinks or by otherwise participating in crosslinking. R¹¹ may have the following structure:

-(alk)ₑ(Ar)_{f}Sᵢ(alk)_{g}(Ar)ₕSiR⁸R⁹R¹⁰

where
R⁸, R⁹ and R¹⁰ are the same as previously defined, alk is a divalent straight hydrocarbon group having between 1 and 6 carbon atoms or a branched hydrocarbon group having between 2 and 6 carbon atoms, Ar is either a phenylene -C₆H₄-, biphenylene -C₆H₄-C₆H₄- or -C₆H₄-OC₆H₄-group and e, f, g and h are either 0, 1 or 2 and i is an integer from 2 to 8 inclusive with the provisos that the sum of e and f is always 1 or greater than 1 and that the sum of g and h is also always 1 or greater than 1. Alternately, R¹¹ may be represented by the structures (alk)ₑ(Ar)_{f}SH or (alk)ₑ(Ar)_{f}SCN where e and f are as defined previously.

Preferably, R⁸, R⁹ and R¹⁰ are all either OCH₃, OC₂H₅ or OC₃H₈ groups and most preferably all are OCH₃ or OC₂H₅ groups. It is most preferred that the sulfur-containing silane is bis[3-(trimethoxysilyl)propyl]-tetrasulfane (Si-168).

Non-limiting illustrative examples of other sulfur-containing silanes include the following:
bis[3-(triethoxysilyl)propyl]disulfane,
bis[2-(trimethoxysilyl)ethyl]tetrasulfane,
bis[2-(tricthoxysilyl)ethyl]trisulfane,
bis[3-(trimethoxysilyl)propyl]disulfane,
3-mercaptopropyltrimethoxysilane,
3-mercaptopropylmethyldiethoxysilane, and
3-mercaptoethylpropylethoxymethoxysilane.

Other preferred sulfur-containing silanes include those disclosed in published German patent application 44 35 311 A1, the disclosure of which is incorporated by reference. On pages 2 and 3, there is disclosure of oligomers and polymers of sulphur containing organooxysilanes of the general formula: 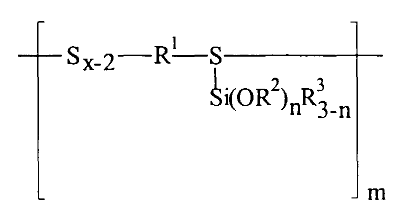 in which
R¹ is a saturated or unsaturated, branched or unbranched, substituted or unsubstituted hydrocarbon group that is at least trivalent and has from 2 to 20 carbon atoms, provided that there are at least two carbon-sulphur bonds, R² and R³, independently of each other, are saturated or unsaturated, branched or unbranched, substituted or unsubstituted hydrocarbon groups with 1 to 20 carbon atoms, halogen, hydroxy or hydrogen, n is 1 to 3, m is 1 to 1000, p is 1 to 5, q is 1 to 3 and x is 1 to 8.

Other sulfur-containing silanes are of the general formula 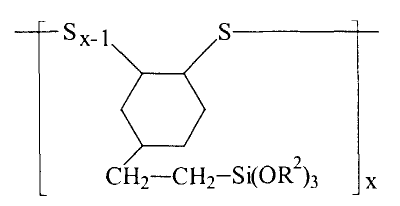 wherein

R², m and x have the meanings given above, and R² is preferably methyl or ethyl.

These compounds disclosed are in German Patent Application No. 44 35 311 A1.

Particularly preferred sulfur-containing silanes are those of the following general formulae:

(RO)₃SiCH₂CH₂CH₂-[Sₓ-CH₂-CH₂]ₙ-Sₓ-CH₂CH₂CH₂Si(OR)₃

in which
R = -CH₃ or -C₂H₅,
x=1-6 and n=1-10;

(RO)₃SiCH₂CH₂CH₂-[Sₓ-CH₂CH(OH)-CH₂]ₙ-Sₓ-CH₂CH₂CH₂Si(OR)₃

in which
R = -CH₃ or -C₂H₅
x = 1-6 and n = 1-10;

(RO)₃SiCH₂CH₂CH₂-[Sₓ-(CH₂)₆]ₙ-Sₓ-CH₂CH₂CH₂₋Si(OR)₃

in which
R = -CH₃, -C₂H₅ or -C₃H₇,
n = 1-10 and x = 1-6;

CH₃-Si(RO)₂-CH₂CH₂CH₂-[(CH₂)₆]ₙ-Sₓ-CH₂CH₂CH₂Si(OR)₂-CH₃

in which
R = -CH₃, -C₂H₅ or -C₃H₇
n = 1-10 and x = 1-6;

CH₃-Si(RO)₂-CH₂-[Sₓ-(CH₂)₆]ₙ-Sₓ-CH₂-Si(OR)₂-CH₃

in which
R = -CH₃, -C₂H₅ or -C₃H₇
n = 1-10 and x = 1-6;

(RO)₃Si-CH₂CH₂CH₂-[Sₓ-CH₂CH₂OCH₂CH₂)]ₙ-Sₓ-CH₂CH₂CH₂-Si(OR)₃

in which
R = -CH₃, -C₂H₅, -C₃H₇,
n = 1-10 and x = 1-6; 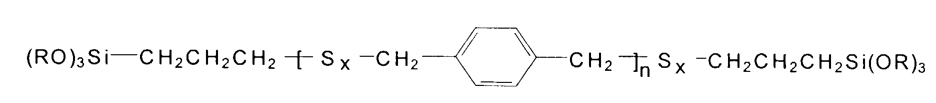
in which
R = -CH₃, -C₂H₅, -C₃H₇,
n = 1-10 and x = 1-6; 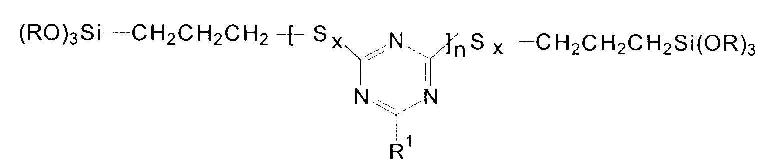
in which
R = -CH₃, -C₂H₅ or -C₃H₇;
R¹ = -CH₃, -C₂H₅, -C₃H₇, -C₅H₅, -OCH₃, -OC₂H₅, -OC₃H₇ or -OC₅H₅,
n = 1-10 and
x = 1-8; and

(RO)₃Si-CH₂CH₂CH₂-[Sₓ-(CH₂)₆]ᵣ-[Sₓ-(CH₂)₈]ₚ-CH₂CH₂CH₂-Si(OR)₃

in which
R = -CH₃, -C₂H₅ or -C₃H₇,
r+p = 2-10 and
x = 1-6.

Also mentioned are sulfur-containing silanes of the formulae:

(RO)₃SiCH₂CH₂CH₂-[Sₓ-(CH₂CH₂)₆]ₙ-Sₓ-CH₂CH₂CH₂₋Si(OR)₃

(RO)₃SiCH₂CH₂CH₂-[Sₓ-CH₂CH(OH)-CH₂]ₙ-Sₓ-CH₂CH₂CH₂Si(OR)₃

in which
- x: is 1-6 and
- n: is 1-4.

If the silane is a sulfur-containing silane it is preferred that it is bis[3-(triethoxysilyl)propyl]- tetrasulfane, of formula

(C₂H₅O)₃Si-CH₂-CH₂-CH₂-S-S-S-S-CH₂-CH₂-CH₂-Si(OC₂H₅)₃.

This compound is commercially available under the trade-mark Si-69. In fact Si-69 is a mixture of the above compound, i.e., the tetrasulfane, with bis[3-(triethoxy-silyl)-propyl]monosulfane and bis[3-(triethoxysilyl)- propyl]trisulfane, average sulfane 3.5.

Another preferred sulfur-containing silane is available under the trade-mark Silquest 1589. The material available under this trade-mark is a mixture of sulfanes but the predominant component, about 75%, is similar in structure to the tetrasulfane Si-69, except that it is a disulfane, i.e., it has only
-S-S-
where Si-69 has
-S-S-S-S-.

The remainder of the mixture is composed of -S, to -S₇- compounds. Silquest A-1589 is available from CK Witco. A similar material is available from Degussa under the trade-mark Si-75.

Yet another preferred sulfur-containing silane is bis[2-(triethoxysilyl)ethyl]tetrasulfane, available under the trade-mark Silquest RC-2.

The trimethoxy compounds corresponding to these triethoxy compounds can also be used.

Of the sulfur-containing silanes, tetrasulfanes and higher sulfanes are preferred to the disulfanes. Although not certain, it is hypothesized that reaction occurs between allyl bromide moieties present in the butyl elastomer and sulfur present in the sulfane. Reaction with tetrasulfanes also results in release of sulfur. This contrasts with reaction with disulfanes, which does not result in release of sulfur. The sulfur released from the tetrasulfanes acts as a vulcanizing agent.

The amount of filler to be incorporated into the butyl elastomer can be varied between wide limits. Typical amounts of filler are about 20 parts to about 120 parts by weight, preferably 30 parts to 100 parts, more preferably 40 to 80 parts per hundred parts of elastomer. The amount of the silane compound or compounds used may be about 2 to 12 parts, preferably 6 to 10 parts, per hundred parts of filler. There may also be present up to about 40 parts of processing oil, preferably 5 to 20 parts, per hundred parts of elastomer, and a lubricant, for example a fatty acid such as stearic acid up to about 3 parts by weight, preferably up to 2 parts by weight.

Carbon black is not normally used as a filler in the halobutyl elastomer compositions of the invention, but in some embodiments it may be present in an amount up to about 40 phr. If the mineral filler is silica and it is used with carbon black, the silica should constitute at least 55% by weight of the total of silica and carbon black. If the halobutyl elastomer composition of the invention is blended with another elastomeric composition, that other composition may contain carbon black as a filler.

The butyl elastomer, filler and silane are mixed together, suitably at an elevated temperature that may range from about 30°C to about 200°C. It is preferred that the temperature is greater than about 60°C, and a temperature in the range 90 to 160°C is particularly preferred. Normally the mixing time does not exceed about one hour and a time in the range from about 2 to 30 minutes is usually adequate. The mixing is suitably carried out in an internal mixer such as a Banbury mixer, or a Haake or Brabender miniature internal mixer. A two roll mill mixer also provides a good dispersion of the filler within the elastomer. An extruder also provides good mixing, and permits shorter mixing times. It is possible to carry out the mixing in two or more stages, and the mixing can be done in different apparatus, for example one stage in an internal mixer and one stage in an extruder.

The enhanced interaction between the filler and the butyl elastomer results in improved properties for the filled elastomer. These improved properties include higher tensile strength, higher abrasion resistance, lower permeability and better dynamic properties. These render the filled elastomers particularly suitable for a number of applications, including use in tire treads and tire sidewalls, tire innerliners, tank linings, hoses, rollers, conveyor belts, curing bladders, gas masks, pharmaceutical enclosures and gaskets.

In a preferred embodiment of the invention halobutyl elastomer, silica particles, silane and, optionally, processing oil extender are placed in a mixer such as a Banbury mixer, and mixed. It is preferred that the temperature of the mixing is not too high and preferably does not exceed about 160°C. Higher temperatures may cause curing to proceed undesirably far and impede subsequent processing. The product of mixing these four ingredients at a temperature not exceeding about 160°C is a compound that has good stress/strain properties and can be readily further processed on a warm mill with the addition of further curatives such as sulfur as vulcanizing agent, zinc oxide as activator and magnesium oxide to raise basicity.

The filled brominated butyl rubber compositions of the invention find many uses, but mention is made particularly of use in tire tread compositions. Important features of a tire tread composition are that it shall have low rolling resistance, good traction, particularly in the wet, and good abrasion resistance so that it is resistant to wear. Compositions of the invention display these desirable properties. Thus, an indicator of traction is tan δ at 0°C, with a high tan δ at 0°C correlating with good traction. An indicator of rolling resistance is tan δ at 60°C, with a low tan δ at 60°C correlating with low rolling resistance. Rolling resistance is a measure of the resistance to forward movement of the tire, and low rolling resistance is desired to reduce fuel consumption. Low values of loss modulus at 60°C are also indicators of low rolling resistance. As is demonstrated in the examples below, compositions of the invention display high tan δ at 0°C, low tan δ at 60°C and low loss modulus at 60°C.

The filled halogenated elastomers of this invention can be further mixed with other rubbers, for example natural rubber, butadiene rubber, styrene-butadiene rubber and isoprene rubbers, and compounds contain these elastomers.

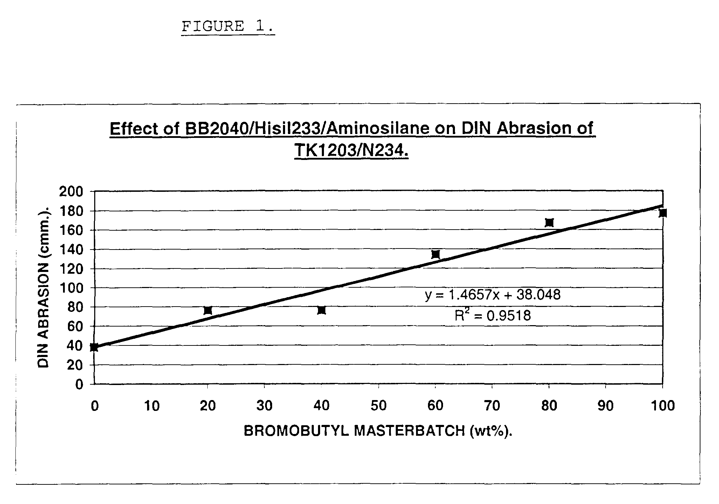

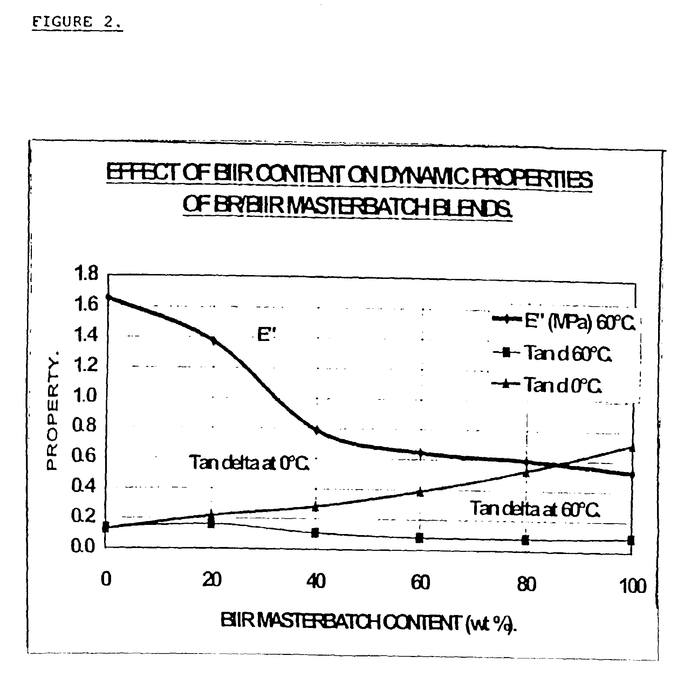

The invention is further illustrated in the following examples and the accompanying Figures 1 and 2.

### Description of tests:

### Abrasion resistance: DIN 53-516 (60 grit Emery paper)

### DYNAMIC PROPERTY TESTING

Dynamic testing (Tan δ at 0°C and 60°C, Loss modulus at 60°C) were carried out using the Rheometrics RSA II. The RSA II is a dynamic mechanical analyzer for characterizing the properties of vulcanized elastomeric materials.

The dynamic mechanical properties give a measure of traction with the best traction usually obtained with high values of Tan δ at 0°C. Low values of Tan δ at 60°C., and in particular, low loss modulus at 60°C. are indicators of low rolling resistance.

Cure rheometry: ASTM D 52-89 MDR2000E Rheometer at 3° arc and 1.7 Hz Permeability: ASTM D 14-34

The invention is further illustrated in the following examples.

### Description of Ingredients and General Mixing Procedure:

HiSil 233 - silica - a product of PPG
Sunpar 2280 - paraffinic oil produced by Sun Oil
Calsol 8240 - naphthenic oil produced by Calument Lubricants Co.

The halobutyl elastomer, silica and silane compounds were mixed in a model B Banbury mixer with a nominal volume of 1570 milliliters and using a fill factor of either 70% or 73% of the nominal volume. The starting temperature was 40°C.

At 0 minutes, the rubber was added to the Banbury followed by the oil + 1/3 of the silica + 1/2 of the silane. The ram was lowered and the Banbury turned on at 77rpm.

At 1 minute, a second 1/3 of the silica was added.

At 2 minutes, the remainder of the silane and silica was added.

After 4 minutes the Banbury chute was swept.

The products were mixed for a total of 5 minutes at 120 - 145°C. It was necessary to increase the speed to 116 or 155 rpm for periods of time to attain, and maintain, a temperature of 145°C.

The compound was removed from the Banbury, and sheeted out on a warm mill set at 40°C.

Curatives were then added to all or a portion of the compound on a mill set at 30°C.

### Example 1

Brominated isoprene isobutylene rubber (BIIR) was mixed with 3-aminopropyltriethoxysilane, silica filler (Hisil 233) and oil extender (Sunpar 2280) in a model B Banbury mixer under the mixing conditions described above. Identical curative ingredients were then added on a cool mill to each of the compounds. The compounds were then cured for either t_{c(90)} + 10 minutes at 170°C (for DIN Abrasion testing) or t_{c(90)} + 5 minutes at 170°C and tested. Table 1 gives the product compositions, t_{c(90)} and data:

**TABLE 1**

| Compound I.D. | A | B | C | D | E |
|---|---|---|---|---|---|
| Polysar Bromobutyl BB2040 | 100 | 100 | 100 | 100 | 100 |
| Silica HiSil 233 | 40 | 40 | 60 | 60 | 60 |
| Sunpar 2280 | 10 | 10 | 20 | 20 | 10 |
| 3-aminopropyl-triethoxy-silane | 0 | 6 | 0 | 4.5 | 3 |
| Stearic acid | 1 | 1 | 1 | 1 | 1 |
| Sulfur | 0.5 | 0.5 | 0.5 | 0.5 | 0.5 |
| Vulcazit DM/C (MBTS) | 1 | 1 | 1 | 1 | 1 |
| Zinc Oxide | 3 | 3 | 3 | 3 | 3 |
| Cure time t_{c(90)}(mins @ 170°C) | 28 | 19 | 20 | 21 | 18 |
| DIN Abrasion resistance(mm3). | 829 | 450 | 675 | 466 | 332 |

| Dynamic properties (measured on a Rheometrics RSA2 rheometer) | | | | | |
|---|---|---|---|---|---|
| Tan δ at 0°C. | .60 | .78 | .26 | .69 | .52 |
| Tan δ at 60°C. | .16 | .11 | .09 | .13 | .13 |
| Loss modulus at 60°C (MPa,). | .79 | .40 | 2.12 | .53 | 1.30 |

Comparison of A with B, and of C with D, shows significant improvement in abrasion resistance for the compounds containing 3-aminopropyl-triethoxysilane. E shows further improvement in abrasion resistance when a higher ratio of silica to oil is used.

The dynamic mechanical properties give a measure of traction with the best traction usually obtained with high values of Tan δ at 0°C. Low values of Tan δ at 60°C and, in particular, low loss modulus at 60°C are indicators of low rolling resistance. Comparison of A with B shows both the indicators for traction and rolling resistance are improved by the addition of 3-aminopropyl-triethoxysilane. Comparison of C with D, shows the indicator for traction and the loss modulus at 60°C, an indicator for rolling resistance are improved by the addition of 3-aminopropyl-triethoxysilane.

### Example 2

This example is a comparative example and shows the effect of curatives with no silanes present.

BIIR was mixed with 20phr. Sunpar 2280, 40phr. Hisil 233 and 1phr. stearic acid in a model B Banbury mixer under the mixing conditions described above. Varying amounts of sulfur, zinc oxide and magnesium oxide were then added on a cool mill. The compounds were then cured for either t_{c(90)} + 10 minutes (for DIN Abrasion testing) at 170°C or t_{c(90)} + 5 minutes at 170°C and tested. Table 2 gives the product compositions, t_{c(90)} and data:

**TABLE 2**

| Compound I.D. | F | G | H | I | J | K | L | M | N |
|---|---|---|---|---|---|---|---|---|---|
| Polysar Bromobutyl BB2040 | 100 | 100 | 100 | 100 | 100 | 100 | 100 | 100 | 100 |
| Silica HiSil 233 | 40 | 40 | 40 | 40 | 40 | 40 | 40 | 40 | 40 |
| Sunpar 2280 | 20 | 20 | 20 | 20 | 20 | 20 | 20 | 20 | 20 |
| Stearic acid | 1 | 1 | 1 | 1 | 1 | 1 | 1 | 1 | 1 |
| Sulfur | 1 | 0.5 | 0.5 | 0.5 | 2 | 0.5 | 1 | 2 | 2 |
| Magnesium oxide | 0 | 0 | 1 | 2 | 1 | 1 | 2 | 1 | 2 |
| Zinc Oxide | 3 | 1 | 3 | 1 | 3 | 0 | 0 | 0.5 | 1 |
| Cure time t_{c(90)} (mins @ 170°C.) | 20 | 25 | 20 | 18 | 15 | 7 | 5 | 6 | 8 |
| DIN Abrasion resistance (mm³) | 1310 | 1175 | 1004 | 768 | 601 | 551 | 476 | 538 | 389 |

| Dynamic properties (measured on a Rheometrics RSA2 rheometer) | | | | | | | | | |
|---|---|---|---|---|---|---|---|---|---|
| Tan δ at 0°C. | .54 | .55 | .39 | .51 | .47 | .54 | .54 | .58 | .47 |
| Tan δ at 60°C. | .17 | .17 | .12 | .12 | .12 | .12 | .11 | .13 | .10 |
| Loss modulus (60°C)(MPa) | .54 | .51 | .95 | .65 | .73 | .55 | .60 | .54 | .70 |

The abrasion resistance is improved by a combination of increasing the sulfur and/or the magnesium oxide content, and decreasing the zinc oxide content. It is believed that these result in an increase in the number of polysulfidic linkages and a decrease in the number of C-C crosslinks, and a consequent improvement in abrasion resistance.

### Example 3

BIIR was mixed with 10phr. Sunpar 2280, variable 3-aminopropyl-triethoxysilane, and variable Hisil 233 in a model B Banbury mixer under the mixing conditions described above. 1phr. of stearic acid, 1phr. of magnesium oxide, 1phr. of zinc oxide plus either 0.5, 1, or 2 phr. of sulfur were then added on a cool mill. The compounds were then cured t_{c(90)}+ 5 minutes at 170°C and tested. Table 3 gives the product compositions, t_{c(90)} and data:

**TABLE 3**

| Compound I.D. | O | P | Q | R | S | T | U | V | W |
|---|---|---|---|---|---|---|---|---|---|
| Polysar Bromobutyl BB2040 | 100 | 100 | 100 | 100 | 100 | 100 | 100 | 100 | 100 |
| Silica HiSil 233 | 60 | 60 | 60 | 80 | 80 | 80 | 80 | 80 | 100 |
| Sunpar 2280 | 10 | 10 | 10 | 10 | 10 | 10 | 10 | 10 | 10 |
| 3-aminopropyl triethoxysilane | 4 | 8 | 12 | 4 | 4 | 8 | 8 | 8 | 12 |
| Stearic acid | 1 | 1 | 1 | 1 | 1 | 1 | 1 | 1 | 1 |
| Sulfur | 1 | 2 | 1 | 0.5 | 2 | 1 | 1 | 1 | 1 |
| Magnesium oxide | 1 | 1 | 1 | 1 | 1 | 1 | 1 | 1 | 1 |
| Zinc Oxide | 1 | 1 | 1 | 1 | 1 | 1 | 1 | 1 | 1 |
| Cure time t_{c(90)} (mins @ 170°C.) | 10 | 7 | 7 | 15 | 7 | 8 | 7 | 7 | 5 |

| Compound I.D. | O | P | Q | R | S | T | U | V | W |
|---|---|---|---|---|---|---|---|---|---|
| DIN Abrasion resistance(mm³) | 275 | 143 | 213 | 236 | 254 | 185 | 230 | 234 | 361 |

| Dynamic properties(measured on a Rheometrics RSA2 rheometer) | | | | | | | | | |
|---|---|---|---|---|---|---|---|---|---|
| Tan δ at 0°C. | .72 | .75 | .66 | .35 | .34 | .68 | .67 | .67 | .57 |
| Tan δ at 60°C. | .11 | .10 | .10 | .11 | .09 | .13 | .12 | .12 | 13 |
| Loss modulus (60°C)(MPa) | .58 | .46 | .64 | 2.58 | 2.46 | .77 | .76 | .80 | 1.26 |

Abrasion resistance is improved compared to the values in Examples 1 and 2. In particular compound P has very good abrasion resistance combined with excellent traction (as indicated by Tan δ at 0°C), and excellent rolling resistance (as indicated by both low Tan δ at 60°C and low loss modulus measured at 60°C).

### Example 4

BIIR was mixed with 10phr. Sunpar 2280, bis(triethoxy-silylpropyl)tetrasulfane, and Hisil 233 in a model B Banbury mixer under the mixing conditions described above. 1phr. of stearic acid, 1phr. of magnesium oxide, 1phr. of zinc oxide plus either 0.5, 1, or 2 phr. of sulfur were then added on a cool mill. The compounds were then cured t_{c(90)} + 5 minutes at 170°C and tested. Table 4 gives the product compositions, t_{c(90)} and data:

**TABLE 4**

| Compound I.D. | O2 | P2 | Q2 | R2 | S2 | T2 | U2 | V2 | W2 |
|---|---|---|---|---|---|---|---|---|---|
| Polysar Bromobutyl BB2040 | 100 | 100 | 100 | 100 | 100 | 100 | 100 | 100 | 100 |
| Silica HiSil 233 | 60 | 60 | 60 | 80 | 80 | 80 | 80 | 80 | 80 |
| Sunpar 2280 | 10 | 10 | 10 | 10 | 10 | 10 | 10 | 10 | 10 |
| bis(triethoxysilylpropyl) tetrasulfane | 4 | 8 | 12 | 4 | 4 | 8 | 8 | 8 | 12 |
| Stearic acid | 1 | 1 | 1 | 1 | 1 | 1 | 1 | 1 | 1 |
| Sulfur | 1 | 2 | 1 | 0.5 | 2 | 1 | 1 | 1 | 2 |
| Magnesium oxide | 1 | 1 | 1 | 1 | 1 | 1 | 1 | 1 | 1 |
| Zinc Oxide | 1 | 1 | 1 | 1 | 1 | 1 | 1 | 1 | 1 |
| Cure time t_{c(90)} (mins @ 170°C.) | 10 | 11 | 12 | 11 | 7 | 8 | 8 | 8 | 7 |
| DIN Abrasion resistance(mm³) | 144 | 150 | 165 | 151 | 160 | 201 | 195 | 195 | 226 |

| Dynamic properties(measured on a Rheometrics RSA2 rheometer) | | | | | | | | | |
|---|---|---|---|---|---|---|---|---|---|
| Tan δ at 0°C. | .68 | .70 | .66 | .62 | .63 | .60 | .61 | .61 | .60 |
| Tan δ at 60°C. | .12 | .12 | .12 | .13 | .13 | .13 | .14 | .13 | .13 |
| Loss modulus (60°C)(MPa) | .56 | .50 | .58 | .92 | .67 | .94 | .89 | 1.06 | 1.09 |

Abrasion resistance is improved compared to the values in Examples 1 and 2. In particular compound P2 has very good abrasion resistance combined with excellent traction (as indicated by Tan δ at 0°C.), and excellent rolling resistance (as indicated by both low Tan δ at 60°C and low loss modulus measured at 60°C).

### Example 5

BIIR was mixed with 10phr. Sunpar 2280, bis(triethoxy-silylpropyl)tetrasulfane (Si69) or bis(triethoxysilyl-propyl)disulfane (Silquest 1589), and 80phr. HiSil 233 in a model B Banbury under the mixing conditions described above. 2 phr. of magnesium oxide, 1phr. of zinc oxide plus 2 phr. of sulfur were then added on a cool mill to some of the compounds. The compounds were then cured for either t_{c(90)}+ 10 minutes (for DIN Abrasion testing) or t_{c(90)} + 5 minutes at 170°C and tested. Table 5 gives the product compositions, t_{c(90)} and data:

**TABLE 5**

| Compound I.D. | X | Y | Z | AA |
|---|---|---|---|---|
| Polysar Bromobutyl BB2040 | 100 | 100 | 100 | 100 |
| Silica HiSil 233 | 80 | 80 | 80 | 80 |
| Sunpar 2280 | 10 | 10 | 10 | 10 |
| Si69 | | | 7.3 | 7.3 |
| Silquest 1589 | 7.3 | 7.3 | | |
| Sulfur | 2 | 0 | 2 | 0 |
| Magnesium oxide | 2 | 0 | 2 | 0 |
| Zinc Oxide | 1 | 0 | 1 | 0 |

| MDR cure characteristics: | | | | |
|---|---|---|---|---|
| Mh | 38.1 | 19.4 | 42.1 | 31.5 |
| Ml | 14.4 | 12.4 | 19.6 | 21.9 |
| Mh-Ml | 23.7 | 6.9 | 22.4 | 9.4 |
| Cure time t_{c(90)} (mins @ 170°C.) | 10 | 11 | 11 | 4 |
| 200% modulus (MPa) | 7.7 | 3.6 | 11.6 | 6.1 |
| DIN Abrasion resistance(mm³). | 190 | too soft | 168 | 292 |

| Dynamic properties (measured on a Rheometrics RSA2 rheometer) | | | | |
|---|---|---|---|---|
| Tan δ at 0°C. | .64 | N.D. | .59 | N.D. |
| Tan δ at 60°C. | .15 | N.D. | .14 | N.D. |
| Loss modulus (60°C)(MPa) | 1.00 | N.D. | 1.15 | N.D. |
| N.D. = Not determined. | | | | |

The moving die rheometer (MDR) and 200% modulus data show that Si69 gives higher states of cure than Silquest 1589, both in the presence and the absence of curatives. BIIR probably reacts with the S-S bonds in both Si69 and Silquest 1589 forming a bond between the BIIR and the silane and at the same time releasing some free sulfur. This free sulfur will cure BIIR. The amount of sulfur in Si69 is much higher than in Silquest 1589, hence the higher crosslink density for Si69, and the lower DIN abrasion. The Silquest 1589 containing no curatives was too soft to test.

### Example 6

The following compound containing polybutadiene was prepared in a model B Banbury mixer.

| Compound I.D. | BB |
|---|---|
| High cis-polybutadiene rubber (Taktene 1203) | 100 |
| Calsol 8240 | 15 |
| N234 C Black | 60 |
| Stearic Acid | 2 |
| Zinc Oxide | 3 |

The compound was mixed in a model B Banbury mixer with a nominal volume of 1638 milliliters, and using a fill factor of 73%. The starting temperature was 30°C.

At 0 minutes, 50% of the rubber was added followed by the zinc oxide, oil, carbon black, stearic acid and the remainder of the rubber. The ram was lowered and the Banbury turned on at 77 rpm.

After 3 minutes the Banbury chute was swept.

Mixing was continued for 6 minutes, at which time the compound was dumped and sheeted out on a cool mill set at 40°C.

The following curatives were then added on a cool mill set at 40°C.

| | |
|---|---|
| Sulfur | 1.5 |
| TBBS | 0.9 |

A BIIR composition containing silica filler and 3-aminopropyl-triethoxysilane (compound P, see Table 3, above) was blended with a BR composition containing carbon black filler (compound BB, above) on a cool mill in various ratios. The compounds were then cured for t_{c(90)} + 5 minutes at 170°C and tested. Table 6 gives the product compositions, t_{c(90)} and data:

**TABLE 6**

| Compound I.D. | CC | DD | EE | FF | GG | HH |
|---|---|---|---|---|---|---|
| Polysar Bromobutyl compound P | 0 | 20 | 40 | 60 | 80 | 100 |
| Taktene 1203 compound X | 100 | 80 | 60 | 40 | 20 | 0 |
| Cure time t_{c(90)} (mins @ 170°C.) | 6 | 22 | 42 | 35 | 20 | 6 |
| DIN Abrasion resistance (mm³). | 38 | 76 | 76 | 134 | 167 | 177 |

| Dynamic properties (measured on a Rheometrics RSA2 rheometer) | | | | | | |
|---|---|---|---|---|---|---|
| Tan δ at 0°C. | .13 | .219 | .281 | .389 | .528 | .714 |
| Tan δ at 60°C. | .14 | .16 | .11 | .08 | .08 | .09 |
| Loss modulus MPa(60°C). | 1.65 | 1.37 | .79 | .65 | .60 | .53 |

| Goodrich flexometer (cured t_{c(90)} + 10' at 170°C ambient temp. 55°C, 11Kg on beam, 17.5% compression) | | | | | | |
|---|---|---|---|---|---|---|
| Heat Rise °C | 36.7 | 45 | 24.7 | 16.3 | -- | 16.3 |
| Permanent set (percent) | 6.1 | 8.7 | 1.8 | 0.9 | -- | 1.4 |
| Permeability to air (Q×10⁻⁸)at 65°C | 47 | 28 | 21 | 11 | - | 3 |

Polybutadiene has the lowest abrasion resistance of general purpose rubbers (GPR). Fig. 1 shows DIN abrasion increasing linearly as the BIIR content increases. Table 6 and Fig. 2 also show the loss modulus, E", decreasing, and Tan delta at 0°C increasing as the BIIR content increases. I.e. the indicators for rolling resistance and wet traction show that the addition of BIIR lowers rolling resistance and increases wet skid resistance as desired. Thus there is a trade off between abrasion and the other two properties.

The permeability of compound HH makes it suitable for use as a tire innerliner compound.

### Example 7

This example shows a typical known BR/SBR tire tread compound, for purpose of comparison with compounds of the invention.

Blends of 30% BR with 70% SBR, which are representative of actual tire tread compounds, were mixed in a B Banbury with the curatives added on a warm mill. The compounds were then cured t_{c(90)} + 5 minutes at 166°C and tested. Table 7 gives the product compositions, t_{c(90)}and data:

**TABLE 7**

| Compound I.D. | II | JJ |
|---|---|---|
| Styrene butadiene rubber (Buna VSL 5025-1) | 96.3 | 96.3 |
| TAKTENE 1203 | 30 | 30 |
| N234 C Black | 80 | |
| HI-SIL 233 | | 80 |
| SILANE Si69 | | 6.4 |
| STEARIC ACID | 1 | 1 |
| SUNDEX 790 | 9 | 9 |
| SUNPROOF IMPROVED WAX | 1.5 | 1.5 |
| VULKANOX 4020(PPD) | 1 | 1 |
| VULKANOX HS/LG (TMQ) | 1 | 1 |
| ZINC OXIDE | 2.5 | 2.5 |
| SULFUR NBS | 1.4 | 1.4 |
| VULCACIT CZ/EG-C (CBS) | 1.7 | 1.7 |
| VULCACIT D/C (DPG) | | 2 |
| Cure time t_{c(90)} (mins @ 166°C.) | 6.63 | 12.81 |
| DIN Abrasion resistance (mm³). | 147 | 142 |

| Dynamic properties (measured on a Rheometrics RSA2 rheometer) | | |
|---|---|---|
| Tan δ at 0°C. | .18 | .23 |
| Tan δ at 60°C. | .14 | .09 |
| Loss modulus(60°C)(MPa) | 3.34 | 1.33 |

| Goodrich flexometer (cured t_{c(90)} + 10' at 166°C ambient temp. 55°C, 11Kg on beam, 17.5% compression) | | |
|---|---|---|
| Heat Rise °C | 36.3 | 18.0 |
| Permanent Set (percent) | 5.1 | 2.1 |

Taktene 1203 is a high cis-content polybutadiene that is approximately 96% cis, and is commercially available from Bayer AG.
Sundex 790 is an aromatic process oil supplied by Sun Co.
Sunproof Improved Wax is a wax supplied by Uniroyal Chemical.
Vulkanox 4020 and Vulkanox HS/CL are antioxidants supplied by Bayer.
Vulkacit CZ/EG-C and Vulkacit D/C are accelerators supplied by Bayer.

In order to prepare vulcanized specimens for testing, the ingredients of the compound formulations shown above were mixed in an internal rubber compound mixer, the particular mixer being a BR-82 Banbury mixer with a volumetric capacity of 1600cc. The mixer settings were:

| | |
|---|---|
| Speed: | 77rpm |
| Cooling Medium | set @ 25°C |
| Ram pressure | 30 psi |
| Start temperature | 40°C |

The mix procedure used for compound II was as follows: the Buna VSL 5025-1 and Taktene 1203 rubbers were first added to the Banbury mixer; after 60 seconds the N234 carbon black, stearic acid, Sundex 790 process oil, wax, Vulkanox 4020, Vulkanox HS and zinc oxide were then added and the ram lowered; after a further 180 seconds the ram was raised and any ingredients that had risen over the ram were swept back into the mass; and finally after a further 60 seconds the mixture was dumped from the Banbury mixer for a total Banbury mix time of 5 minutes. The mixture was then transferred to a warm (40°C) two roll mill and 1.4 parts sulfur and 1.7 parts Vulkacit CZ/EG-C(CBS) were then blended into the mixture for a mill mix time of four minutes. The nip setting on the mill was then reduced to 0.5 mm and the mixture passed through the mill 6 times in a refining step to give a final mixture whose specific gravity was 1.148.

Compound JJ in the example shown in Table 7 was prepared by two mixing steps in the internal mixer with again a final step on a warm mill. The internal mixer settings were the same as used for compound II. The first step to prepare the compound JJ mixture was to add the vinyl solution styrene rubber containing 100 parts rubber and 37.5 parts of aromatic oil extender Buna VSL 5025-1 and the high cis polybutadiene rubber Taktene 1203 to the internal mixer. This mixture was mixed for 60 seconds. To this mixture 40 parts of untreated silica (Hi-Sil 233) and 3.2 parts of Si-69 silane were added and the mixture mixed for an additional 60 seconds. The ram was then raised and an additional 40 parts of untreated silica and 3.2 parts of Si-69 was added to the mixture. After a further 60 seconds the ram was raised and ingredients that had escaped from the mass were swept back into the mass. The ram was then lowered and mixing continued for a further 60 seconds. The ram was again raised after a total elapsed time of 240 seconds and 1 part stearic acid, 9 parts of Sundex 790 extender oil, 1.5 parts of wax, 1 part of Vulkanox 4020, 1 part Vulkanox HS and 2.5 parts of zinc oxide were added; the ram was swept and then lowered and mixing continued for an additional 60 seconds when the ram was again raised and escaped ingredients swept back into the mass and then lowered and mixing continued for an additional 120 seconds after which the mixture was dumped out of the mixer and formed into a sheet. The total elapsed mixing time for step 1 was 7 minutes.

The internal mixer was then allowed to cool to 40°C and the sheeted out mixture added to the mixer and mixing was continued until the temperature reached 150°C as measured by the ram temperature probe. The total elapsed time for step 2 was 4.5 minutes.

The final mixing step was done on a warm mill to which were added the mixture from internal mixing step 2, 1.4 parts sulfur, 1.7 parts of accelerator Vulkacit CZ and 2 parts of accelerator Vulkacit D. This mixture was blended on the mill for four minutes. The nip setting on the mill was then reduced to 0.5 mm and the mixture passed through the mill 6 times in a refining step to give a final mixture whose specific gravity was 1.190. Comparison of compound FF, a 40/60 blend of BR/BIIR masterbatches, shows equal or superior properties to both compounds II and JJ which are representative of the current technology. The indicators for traction and rolling resistance are significantly better, and the abrasion resistance is comparable. The reduced heat rise and low permanent set for compound FF compared to compounds II and JJ are particularly surprising, and suggest additional improved characteristics for optimum tire behaviour.

## Claims

1. A process for preparing a filled halobutyl elastomer which comprises admixing a halobutyl elastomer, particles of filler and a silane that has at least one hydroxyl group or hydrolysable group attached to a silicon atom of the silane, and curing the filled halobutyl elastomer with sulphur.

2. A process according to claim 1, wherein the halobutyl elastomer is a bromobutyl elastomer.

3. A process according to claim 1 wherein the halobutyl elastomer is a brominated isobutylene-p-methyl styrene copolymer.

4. A process according to claim 1 wherein the halobutyl elastomer is a chlorobutyl elastomer.

5. A process according to claim 1, wherein the filler is silica.

6. A process according to claim 1 wherein the filled halobutyl elastomer is admixed with another elastomer or elastomeric compound before it is subjected to curing with sulphur.

7. A process according to claim 1, wherein the silane has at least one alkoxy group having up to six carbon atoms attached to a silicon atom of the silane.

8. A process according to claim 7, wherein the alkoxy group is a methoxy or ethoxy group.

9. A process according to claim 1, wherein the silane is an aminosilane.

10. A process according to claim 9, wherein the aminosilane is 3-aminopropyl trimethoxysilane or 3-aminopropyl triethoxysilane.

11. A process according to claim 1, wherein the silane is a sulfur-containing silane.

12. A process according to claim 11, wherein the sulfur-containing silane is
bis[3-(triethoxysilyl)propyl]tetrasulfane,
bis[3-(trimethoxysilyl)propyl]tetrasulfane,
bis[3-(triethoxysilyl)propyl]disulfane or
bis[3-(trimethoxysilyl)propyl]disulfane.

13. A process according to claim 1, wherein the silane is a mixture of an aminosilane and a sulfur-containing silane.

14. A process according to claim 1, wherein the mixing is carried out at a temperature between 30°C and 200°C for 0.5 to 60 minutes.

15. A process according to claim 1, wherein the filled halogenated elastomer is cured with 0.3 to 2.0 parts by weight of sulphur.

16. A process according to claim 15, wherein the filled halogenated elastomer is admixed with 0.3 to 2.0 parts by weight of sulfur and 0.5 to 2 parts by weight of magnesium oxide per hundred parts by weight of elastomer.

17. A process according to claim 16, wherein zinc oxide in an amount up to 5 parts by weight is also admixed with the elastomer prior to curing.

18. A filled, cured halobutyl elastomer composition prepared by a process according to claim 1.

19. A filled, cured bromobutyl elastomer composition prepared by a process according to claim 1.

20. A filled, cured elastomer composition according to claim 18 in the form of a tread for a vehicle tire.

21. A filled, cured elastomer composition according to claim 18 in the form of an innerliner for a vehicle tire.

22. A filled, cured elastomer composition according to claim 19 in the form of a tread for a vehicle tire.

23. A filled, cured elastomer composition according to claim 19 in the form of an innerliner for a vehicle tire.
